# EUROPEAN PATENT APPLICATION

(11) **EP 0 578 954 A1**
(43) Date of publication of application: **19.01.1994**
(21) Application number: 93108787.8
(22) Date of filing: 01.06.1993
(51) Int. Cl.: B64C 1/00, B64C 39/02, B64C 39/06

(54) **A high-passenger capacity airplane**

(30) Priority: 14.07.1992 RU 5054622
(71) Applicant: Abdurachmanovich, Muchamedov Fatidin, Moscow 113648 (RU)
(72) Inventor: Abdurachmanovich, Muchamedov Fatidin, Moscow 113648 (RU)
(74) Representative: Betten & Resch

(57) **Abstract**

The invention belongs to aeronautical engineering sphere and can be used in the design of the high-passenger capacity airplanes, and the airbuses of a blended layout, which can operate in passenger as well as in mixed cargo-passenger versions. The technical results provided by the realization of a given invention, are the following: the decrease of an airplane dimentions on retention of the required passenger capacity, the increase in fuel efficiency, an airplane mass reduction, the production costs cutting, the simplification of it's production, and also use of it in passenger and mixed versions. An airplane has the fuselage 1, the lifting center-section wing 2 in a disk form in plan and the outer wing panels 3. The V-tail 4 is designed separated. The passenger seats are housed in the fuselage 1, and an additional passenger or cargo compartment is designed within the lifting center-section wing 2, where passenger seats can be installed or cargo can be located.

## Description

The invention belongs to aeronautical engineering sphere and can be used in the design of the high - passenger capacity airplanes, and the airbuses of a blended layout, which can operate in passenger as well as in mixed cargo - passenger versions.

The design of the high - passenger capacity airplane is known from the existing level of the technique. It is constructed according to a blended layout and contains the fuselage; the wing connected to it, designed as a lifting center - section wing with a curvilinear generating line along the leading edge and the outer wing panels, which are connected to the center - section wing; the vertical tail unit; the powerplant and the landing gear ( see "An Aeronautical engineering and the missile technology", No 1552, 1989, page 1-2). The blended fuselage arrangement of a given airplane allows the payload placement in a minimum constructive volume. This airplane is taken as a prototype.

Making an estimate of an existing technique level given above it is worth noting that, whilst the airplane under discussion surpasses ordinary airbuses in some basic indicators such as the possibility to make the better use of an airport area, the fuel efficiency, the mass reduction and the production costs cutting, nevertheless, it is sufficiently complex for the constructional execution, connected with the necessity of fabrication of a given curvilinear generating line of a center - section wing leading edge, and also it doesn't allow the use of such an airplane in a mixed cargo - passenger version, the necessity of which manifests itself sufficiently acutely in the last few years.

The task posed by the inventor-is the advent of a high-passenger capacity airplane of a blended layout which is easy to produce, and permits the use of it in a mixed cargo-passenger version.

The technical results provided by the realization of a given invention are the following: the decrease of an airplane dimensions on retention of the required passenger capacity, the increase in fuel efficiency, an airplane mass reduction, the production costs cutting, the simplification of it's production, and also use of it in passenger and mixed versions.

The problem in hand is solved, and technical result is obtained by the fact that in the high-passenger capacity airplane of a blended layout containing the fuselage; the wing connected to it, designed as a lifting center-section wing with a curvilinear generating line along the leading edge and the outer wing panels, which are connected to the center-section wing; the vertical tail unit; the powerplant and the landing gear, according to the invention, the lifting center-section wing is designed in a disk form in plan along the leading and the trailing edges, and the outer wing panels are connected to the disk-like center-section wing on it's sides, so that the middle of the root chord each of the outer wing panels coincides with the point of intersection of the center-section wing disk lateral axis with the root chord on retention of the center-section wing leading and trailing edges form along the disk generating line, the fuselage is designed displaced forward from the center-section wing along the airplane axis, smoothly extending, rising above the disk-like center-section wing and mating with it, tapering off beyond the disk center of the center-section wing, not reaching it's trailing edge, the airplane is equiped with the gothic gloves running from the fuselage nose part to the leading edge of the disk-like center-section wing, the airplane tail section is designed orthogonally tipped in plan and oblate on the side view, the V-tail is designed separated and is installed at the airplane tail section, the powerplant engines are located under the wing and/or at the airplane tail section between the V-tail, and the passenger seats are housed in the fuselage, and an additional passenger or cargo compartment is designed within the lifting disk - like center-section wing.

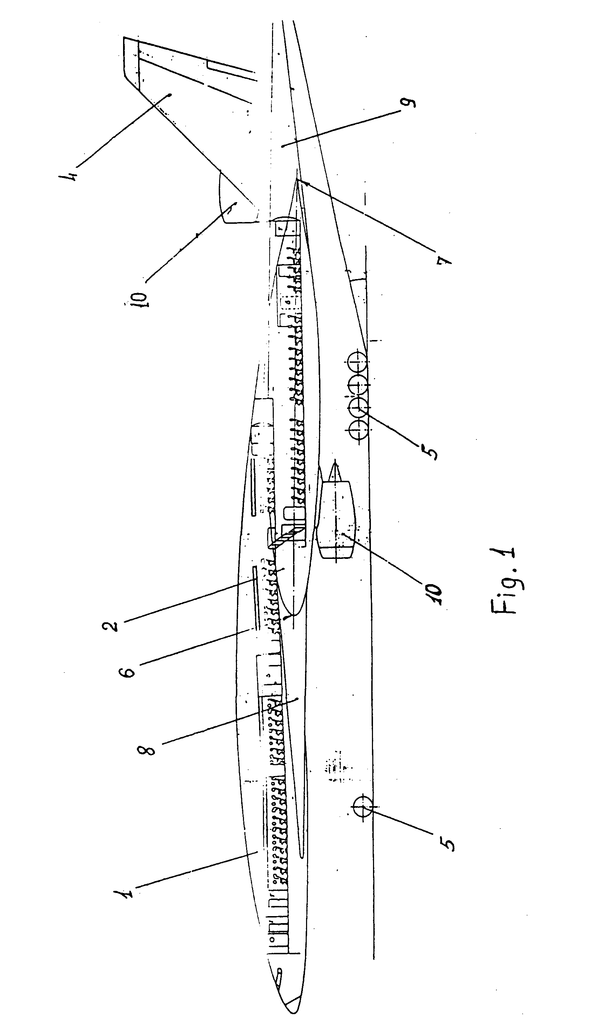

The invention is explained by the following drawings, where
fig.1 -an airplane is shown on the side view;

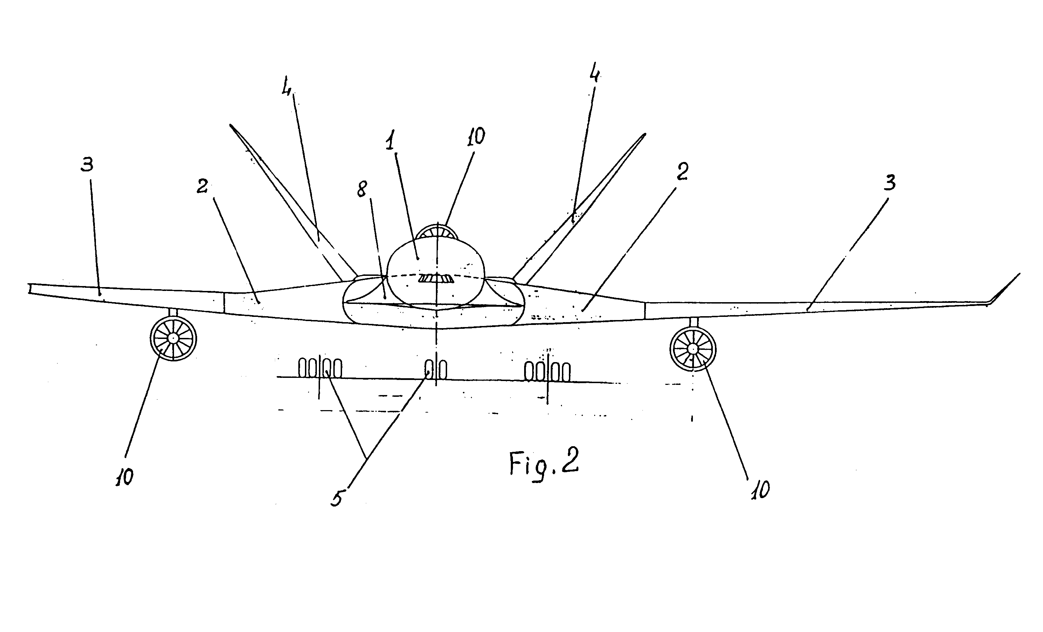

fig.2 -the same, the front view;

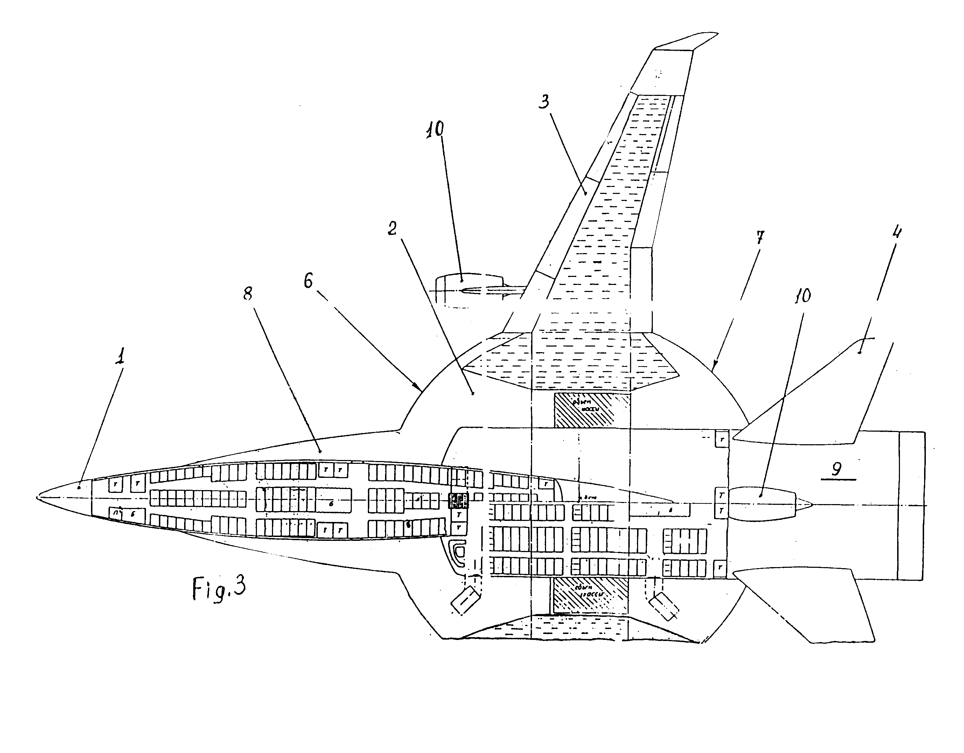

fig.3 - the same, the plan view.

The high-passenger capacity airplane of a blended layout contains the fuselage 1, the wing connected to it, designed as a lifting center-section wing 2 with a curvilinear generating line along the leading edge and the outer wing panels 3, connected to the center-section wing 2. The V-tail unit 4 is designed separated. The airplane has the landing gear 5. The lifting center-section wing 2 is designed in a disk form in plan along the leading 6 and the trailing 7 edges, and the outer wing panels 3 are connected to the disk-like center-section wing 2 on it's sides, so that the middle of the root chord each of the outer wing panels 3 coincides with the point of intersection of the center-section wing 2 disk lateral axis with the root chord on retention of the center-section wing 2 leading 6 and trailing 7 edges form along the disk generating line. The fuselage 1 is designed displaced forward from the center-section wing 2 along the airplane axis, smoothly extending, rising above the disk-like center-section wing 2, mating with it, tapering off beyond the disk center of the center-section wing 2, not reaching it's trailing edge. An airplane has the gothic gloves 8 which run from the fuselage 1 nose part to the leading edge 6 of the disk-like center-section wing 2. The airplane tail section 9 is designed orthogonally tipped in plan and oblate on the side view. The tail unit 4 is installed at the airplane tail section 9. The powerplant engines 10 are located under the wing and / or at the airplane tail section 9 between the separated V-tail 4. The passenger seats are housed in the fuselage 1. The additional passenger or cargo compartment is designed within the lifting disk-like center-section wing 2.

The airplane is functioning in the following manner.

After engines 10 are started up, an airplane begins it's takeoff run along the runway, resting on the runway surface by it's landing gear 5, and initiates a take-off. In the flight an airplane is controlled by the deflection of an aerodynamic controls of the outer wing panels 3 and of the tail unit 4. In an airbus version the passenger seats are housed inside the fuselage 1 and inside the additional passenger compartment within the lifting disk-like center-section wing 2. An airplane under discussion is smaller in overall dimensions and lighter than the airbuses, such as A-310, the passenger capacity being equal at the sacrifice of the fact that the center-section wing has the greater overall height, this permits use of the thiner covering and less material intensive load-bearing members.

The cargo required for a transportation is located inside the additional cargo compartment within the center-section wing 2 in a mixed cargo-passenger version. By way of example, one such version of this airplane is arranged in such a way that sixteen marine cargo containers can be housed inside the additional cargo compartment within the center-section wing 2. By this means the passengers and cargo can be transported in one flight resulting in a cost cutting of cargo transportation. The loads conveyed from the outer wing panels 3 to the fuselage 1 are minimum.

Important features of the invention may be summarized as follows:

The decrease of an airplane dimentions on retention of the required passenger capacity, the increase in fuel efficiency, an airplane mass reduction, the production costs cutting, the simplification of it's production, and also use of it in passenger and mixed versions. An airplane has the fuselage 1, the lifting center-section wing 2 in a disk form in plan and the outer wing panels 3. The V-tail 4 is designed separated. The passenger seats are housed in the fuselage 1, and an additional passenger or cargo compartment is designed within the lifting center-section wing 2, where passenger seats can be installed or cargo can be located.

Each one of the above-mentioned features or any combination thereof may be important for the invention.

## Claims

1. High passenger capacity airplane having the fuselage (1), the lifting center-section wing (2) in a disk form in plan and the outer wing panels (3).

2. Airplane according to claim 1, wherein the V-tail (4) is designed separated.

3. Airplane according to claim 1 or 2, wherein the passenger seats are housed in the fuselage (1), and an additional passenger or cargo compartment is designed within the lifting center-section wing (2), where passenger seats can be installed or cargo can be located.

4. Airplane according to claim 1, 2 or 3, characterized by one or several or by the combination of the following features: the airplane contains the fuselage 1; the wing connected to it, designed as a lifting center-section wing 2 with a curvilinear generating line along the leading edge and the outer wing panels 3, connected to the center-section wing 2; the vertical tail unit 4; the powerplant and the landing gear 5 differs in that the lifting center-section wing 2 is designed in a disk form in plan along the leading 6 and the trailing 7 edges, and the outer wing panels 3 are connected to the disk-like center-section wing 2 on it's sides, so that the middle of the root chord each of the outer wing panels 3 coincides with the point of intersection of the center-section wing 2 disk lateral axis with the root chord on retention of the center-section wing 2 leading 6 and trailing 7 edges 7 form along the disk generating line, the fuselage 1 is designed displaced forward from the center-section wing 2 along the airplane axis, smoothly extending, rising above the disk-like center-section wing 2 and mating with it, tapering off beyond the disk center of the center-section wing 2, not reaching it's trailing edge, an airplane is equiped with the gothic gloves 8 running from the fuselage 1 nose part to the leading edge 6 of the disk-like center-section wing 2, an airplane tail section 9 is designed orthogonally tipped in plan and oblate on the side view, the V-tail is designed separated and is installed at the airplane tail section 9, the powerplant engines 10 are located under the wing and/or at the airplane tail section 9 between the V-tail 4, and the passenger seats are housed in the fuselage 1, and an additional passenger or cargo compartment is designed within the lifting disk-like center-section wing 2.
